(19) Europäisches Patentamt
European Patent Office
Office européen des brevets

(11) **EP 3 356 006 B1**

(12) **FASCICULE DE BREVET EUROPEEN**

(45) Date de publication et mention
de la délivrance du brevet:
**15.09.2021 Bulletin 2021/37**

(51) Int Cl.:
***B01D 1/00*** *(2006.01)*      ***B01D 1/02*** *(2006.01)*
***B01D 1/14*** *(2006.01)*      ***B01D 3/34*** *(2006.01)*
***F22B 1/28*** *(2006.01)*

(21) Numéro de dépôt: **16777952.9**

(22) Date de dépôt: **28.09.2016**

(86) Numéro de dépôt international:
**PCT/EP2016/073081**

(87) Numéro de publication internationale:
**WO 2017/055335 (06.04.2017 Gazette 2017/14)**

(54) **DISPOSITIF DE CONVERSION D'UN LIQUIDE EN VAPEUR ET PROCEDE DE REGULATION D'UNE PUISSANCE DE CHAUFFAGE ASSOCIE**

VORRICHTUNG ZUR UMWANDLUNG EINER FLÜSSIGKEIT IN DAMPF UND ZUGEHÖRIGES VERFAHREN ZUR REGELUNG EINER HEIZLEISTUNG

DEVICE FOR CONVERTING A LIQUID INTO VAPOUR AND ASSOCIATED METHOD FOR REGULATING A HEATING POWER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.09.2015 FR 1559098**

(43) Date de publication de la demande:
**08.08.2018 Bulletin 2018/32**

(73) Titulaire: **Commissariat à l'Énergie Atomique et aux Énergies Alternatives**
**75015 Paris (FR)**

(72) Inventeur: **CHATROUX, André**
**38210 Tullins (FR)**

(74) Mandataire: **Cabinet Laurent & Charras**
**Le Contemporain**
**50 Chemin de la Bruyère**
**69574 Dardilly Cedex (FR)**

(56) Documents cités:
**EP-A1- 1 151 705          FR-A- 1 060 544**
**FR-A1- 2 861 974          US-A1- 2010 025 341**
**US-A1- 2010 219 135          US-A1- 2013 011 804**

**Description**

**DOMAINE DE L'INVENTION**

L'invention se rapporte au domaine des générateurs de vapeur, et notamment aux générateurs de vapeur utilisés dans les électrolyseurs de vapeur d'eau à haute température (EHVT).

L'invention concerne plus particulièrement un dispositif de conversion d'un liquide en vapeur capable de fournir un faible débit de vapeur, notamment un débit de vapeur compris notamment entre 10 g/h et 10 kg/h, et fonctionnant à pression constante, notamment à pression atmosphérique ou sous quelques dizaines de bars.

L'invention concerne également le procédé de régulation de la puissance de chauffage du dispositif de conversion d'un liquide en vapeur.

**ETAT DE LA TECHNIQUE**

Un électrolyseur de vapeur d'eau à haute température (EVHT, acronyme pour « Electrolyse de la Vapeur d'eau à Haute Température », ou HTSE acronyme anglo-saxon pour « *High Temperature Steam Electrolysis* ») est un dispositif électrochimique de production d'hydrogène à partir de la vapeur d'eau par application d'un courant électrique à en empilement de cellules électrolytiques connectées électriquement en série, et constituées chacune de deux électrodes, à savoir une cathode et une anode, intercalant une membrane électrolytique à oxyde solide. Globalement, de la vapeur d'eau est introduite au niveau de la cathode de chaque cellule alimentée en électricité, et une réaction de réduction électrochimique de la vapeur d'eau conduit à la formation d'hydrogène sur la cathode.

De manière générale, pour un point de fonctionnement donné de l'électrolyseur, il existe un courant électrique à appliquer à ce dernier et le débit de vapeur d'eau à introduire dans l'électrolyseur est calculé en fonction de l'intensité du courant électrique appliquée sur l'électrolyseur. L'intensité de courant pouvant généralement varier de 0 à 100% de la gamme de fonctionnement de l'électrolyseur, il est donc également nécessaire que le débit de vapeur à générer puisse également évoluer linéairement de 0 à 100% de capacité, et être composé uniquement de vapeur.

En outre, un électrolyseur est un système très sensible aux inhomogénéités de courant/débit de gaz, ces homogénéités pouvant en effet entrainer un vieillissement prématuré de l'électrolyseur. Par exemple, si le débit de vapeur varie autour de sa valeur de consigne, on peut observer une instabilité du point de fonctionnement de l'électrolyseur, qui se traduit par des variations de la tension des cellules, cause de vieillissement prématuré. Plus grave, de fortes variations du débit de vapeur ont pour conséquence des variations de la pression de quelques dizaines ou centaines de mbar, lesquelles peuvent être suffisantes pour endommager les joints d'étanchéité ou fissurer les cellules électrochimiques elles-mêmes. Il est donc recherché un débit de vapeur le plus homogène et régulier possible.

Les dispositifs de production de vapeur comportent généralement une surface d'évaporation chauffée, sur laquelle un liquide est déposé de sorte à générer l'évaporation du liquide. Par exemple, le document WO 2000/29787 décrit un fer à repasser pouvant produire de la vapeur pour améliorer le repassage. La quantité de vapeur produite peut être réglée au cours du temps en modulant le débit de liquide qui est déposée sur la surface chauffante. D'autres dispositifs pour générer de la vapeur sont connus, par exemple des documents US2010/0025341A1 et FR1060544.

Cependant, la variation du débit de liquide sur la surface chauffante induit des surpressions transitoires, également appelées bouffées de vapeur. Ces surpressions transitoires sont dues au fait que le liquide va recouvrir une plus grande partie de la surface chauffante, en particulier des zones se trouvant à une température supérieure à la température d'ébullition, entrainant une vaporisation ponctuelle incontrôlée. Ces surpressions transitoires apparaissent également dans les phases transitoires correspondant à un changement dans la consigne de débit.

L'ajout de volumes tampons peut être une solution pour limiter les surpressions transitoires, mais cette solution présente l'inconvénient de réduire la réactivité du générateur de vapeur lors des changements de consigne et augmente la complexité de l'évaporateur, surtout dans le cas d'un évaporateur conçu pour fonctionner à une pression supérieure à la pression atmosphérique. De plus, même si cette solution réduit l'amplitude des surpressions, cette solution ne les supprime pas.

Le problème technique de l'invention est de limiter les surpressions transitoires d'un dispositif de conversion d'un liquide en vapeur.

**EXPOSE DE L'INVENTION**

La présente invention propose de résoudre ce problème technique en modulant la puissance de chauffage de la surface chauffante en fonction du débit et en fonction d'une température de la surface chauffante.

A cet effet, selon un premier aspect, l'invention concerne un dispositif de conversion d'un liquide en vapeur pour électrolyseur de vapeur d'eau à haute température, ce dispositif comportant :

- une surface d'évaporation,
- une entrée de liquide connectée à la surface d'évaporation présentant une forme hélicoïdale,
- des moyens de chauffage de la surface d'évaporation,
- un régulateur de débit disposé au niveau de l'entrée de liquide,
- une unité de commande configurée pour commander un débit de liquide injecté dans l'entrée de liquide par le régulateur de débit,
- une enceinte contenant la surface d'évaporation, ladite enceinte présentant une ouverture connectée à l'entrée de liquide et une sortie de vapeur, et
- un capteur de température disposé sur la surface d'évaporation.

L'unité de commande est configurée pour commander une puissance de chauffage des moyens de chauffage en fonction d'un débit et d'une température mesurée par le capteur de température selon une loi de commande prédéterminée, ladite loi de commande prédéterminée évoluant, pour chaque débit, de façon non-linéaire et inversement proportionnelle à l'écart entre une température de référence de l'enceinte et la température mesurée par le capteur de température.

L'invention permet ainsi de contrôler la température de la surface chauffante en fonction du débit et en fonction d'une température résiduelle dans l'enceinte contenant la surface chauffante. Ainsi, l'invention évite de surchauffer ou de sous chauffer la surface chauffante par rapport à l'énergie nécessaire pour permettre l'évaporation du liquide limitant ainsi les surpressions transitoires.

Les phases de changement de débit sont également anticipées pour éviter les surpressions transitoires. L'évolution non-linéaire et inversement proportionnelle de la loi de commande permet, à faible débit, d'anticiper une augmentation du débit en surchauffant la surface chauffante de manière raisonnable au-dessus de la température de référence. Inversement, à fort débit, l'évolution de la loi de commande permet d'anticiper une diminution du débit en diminuant la puissance de chauffage de la surface chauffante de manière raisonnable au-dessous de la température de référence.

La régulation de la surface chauffante permet également un fonctionnement à une température moyenne faible, c'est-à-dire de l'ordre de 100°C au-dessus de la température d'ébullition du liquide, ce qui limite les pertes thermiques.

En outre, le dispositif est particulièrement simple à mettre en œuvre, car il nécessite un seul capteur de température. De préférence, le capteur de température est positionné au niveau d'une extrémité de la surface d'évaporation opposée à l'extrémité connectée à l'entrée de liquide. On entend par « l'extrémité de la surface d'évaporation », la partie de la surface d'évaporation qui s'étend jusqu'à une longueur de 1/3 de la surface d'évaporation en partant de l'extrémité opposée à l'extrémité connectée à l'entrée de liquide. Le positionnement de ce capteur de température à l'opposé de l'entrée de liquide permet de limiter l'interaction du capteur avec le liquide.

Selon un mode de réalisation, le dispositif comporte également une entrée de gaz débouchant dans l'enceinte et un second régulateur de débit disposé au niveau de l'entrée de gaz, l'unité de commande étant configurée pour commander une puissance de chauffage des moyens de chauffage en fonction d'un débit du premier régulateur de débit, d'un débit du second régulateur de débit et d'une température mesurée par le capteur de température selon une loi de commande prédéterminée. Ce mode de réalisation permet de combiner l'évaporation du liquide avec un gaz pour former un mélange gazeux avec une concentration maîtrisée. En variante, le dispositif pourrait comporter plusieurs entrées de gaz sans changer l'invention.

Selon un deuxième aspect, l'invention concerne un procédé de régulation d'une puissance de chauffage du dispositif selon le premier aspect de l'invention, le procédé comportant les étapes suivantes :

- si la consigne de débit est nulle, régulation de la puissance de chauffage des moyens de chauffage pour obtenir une température de l'enceinte sensiblement égale à la température de référence,
- si la consigne de débit est non nulle, calcul d'une puissance de chauffage théorique correspondant au débit divisé par un coefficient,
- correction de la puissance de chauffage théorique en fonction de la température mesurée par le capteur de température, et
- application de la puissance de chauffage théorique corrigée aux moyens de chauffage.

La puissance de chauffage théorique à appliquer sur la surface chauffante permet de répartir le liquide sur pratiquement toute la longueur de la surface chauffante, mais cela ne suffit pas pour obtenir un bon fonctionnement, en particulier lors des changements de consigne de débit. Il convient en effet, à faible débit, d'anticiper une augmentation du débit en surchauffant la surface chauffante de manière raisonnable au-dessus de la température de référence. Inversement, à fort débit, il n'est plus possible de maintenir toute la surface chauffante à la température de référence puisqu'il est recouvert de liquide sur une grande longueur. Cependant, dans ce cas, il peut être nécessaire d'appliquer beaucoup de puissance si le liquide risque d'atteindre le fond de l'enceinte, zone dans laquelle il ne sera que très mal vaporisé. L'invention consiste donc à définir, pour chaque débit de liquide à vaporiser, une correction de la puissance à appliquer sur la surface chauffante en fonction de la mesure de température mesurée.

Selon un mode de réalisation, lorsque le dispositif comporte une entrée de gaz débouchant dans l'enceinte et un second régulateur de débit disposé au niveau de l'entrée de gaz, le calcul de la puissance de chauffage théorique correspond à la puissance maximale des moyens de chauffage en pourcentage multiplié par le débit divisé par un coefficient ajouté avec le débit du second régulateur de débit divisé par un second coefficient. Ce mode de réalisation permet d'ajouter la contribution du débit de gaz à chauffer divisé par un second coefficient prenant en compte la chaleur massique du gaz considéré. De préférence, le premier coefficient est déterminé en fonction de la chaleur latente de vaporisation du liquide considéré et de la chaleur massique de la vapeur puis affiné par des essais expérimentaux pour tenir compte des pertes thermiques.

Selon un mode de réalisation, la température de référence correspond à une température moyenne choisie pour le fonctionnement du dispositif de conversion d'un liquide en vapeur, la température de référence étant supérieure à la température de vaporisation du liquide.

Selon un mode de réalisation, l'étape de correction de la puissance de chauffage théorique comporte les étapes suivantes :

- si la température mesurée est inférieure à un premier seuil de température, la puissance est corrigée par une addition de la puissance maximale des moyens de chauffage en pourcentage multipliée avec un premier coefficient, le premier seuil de température étant choisi entre la température de vaporisation du liquide et la température de référence,
- si la température mesurée est inférieure à un second seuil de température, la puissance est corrigée par une soustraction de la puissance maximale des moyens de chauffage en pourcentage multipliée avec la différence de température entre la température mesurée et le second seuil de température et avec un second coefficient, le second seuil de température étant choisi supérieur à la température de référence,
- si la température mesurée est supérieure au second seuil de température, la puissance est corrigée par une soustraction de la puissance maximale des moyens de chauffage en pourcentage multipliée avec la différence de température entre la température mesurée le second seuil de température et avec un troisième coefficient, et
- si la température mesurée est supérieure à un troisième seuil de température, la puissance est corrigée par une soustraction de la puissance maximale des moyens de chauffage en pourcentage multipliée avec un quatrième coefficient, le troisième seuil de température étant choisi supérieur au second seuil de température.

Ce mode de réalisation permet de réguler l'enceinte de fonctionnement à une température au moins égale à la température de référence pour éviter tout risque de condensation de vapeur. La régulation permet de centrer la température de fonctionnement du dispositif sur la température de référence, avec une plage de températures de fonctionnement comprise entre un premier seuil de température et un troisième seuil de température. L'algorithme proposé permet une auto adaptation lors d'un changement de débit grâce à la température mesurée qui reflète l'historique d'utilisation du dispositif. En effet, dans la pratique, la température mesurée est inversement proportionnelle à la quantité de liquide évaporé au cours des instants précédents.

Selon un mode de réalisation, l'étape de correction de la puissance de chauffage théorique comporte l'étape suivante : si la température mesurée est supérieure à un quatrième seuil de température, la puissance est corrigée par une soustraction de la puissance maximale des moyens de chauffage en pourcentage multipliée avec un cinquième coefficient, le quatrième seuil de température étant choisi supérieur au troisième seuil de température.

Ce quatrième seuil de température permet d'accentuer l'effet de limitation de la température au niveau la borne supérieure de la plage de températures de fonctionnement. Selon un mode de réalisation, l'étape de correction de la puissance de chauffage théorique comporte les étapes suivantes :

- si la valeur de la puissance corrigée est inférieure à zéro, la puissance est fixée à zéro, et
- si la valeur de la puissance corrigée est supérieure à une puissance maximale de chauffage, la puissance est fixée à la puissance maximale de chauffage.

Ce mode de réalisation permet de limiter la consigne de puissance appliquée sur la surface chauffante.

**BREVE DESCRIPTION DES FIGURES**

L'invention sera mieux comprise à la lecture de la description qui va suivre, donnée uniquement à titre d'exemple, et réalisée en relation avec les dessins annexés dans lesquels des références identiques désignent des éléments identiques et dans lesquels :

- la figure 1 est une représentation schématique d'un dispositif de conversion d'un liquide en vapeur selon un mode de réalisation de l'invention ;

- la figure 2 est une loi de commande de la puissance d'une surface chauffante en fonction de la température du dispositif de la figure 1 selon un premier mode de réalisation de l'invention ;
- la figure 3 est un organigramme représentant les étapes de régulation de la puissance d'une surface chauffante du dispositif de la figure 1 selon un mode de réalisation de l'invention ; et
- la figure 4 est une représentation de quatre lois de commande de la puissance d'une surface chauffante en fonction de la température du dispositif de la figure 1 selon un second mode de réalisation de l'invention.

## DESCRIPTION DETAILLEE D'UN MODE DE REALISATION DE L'INVENTION

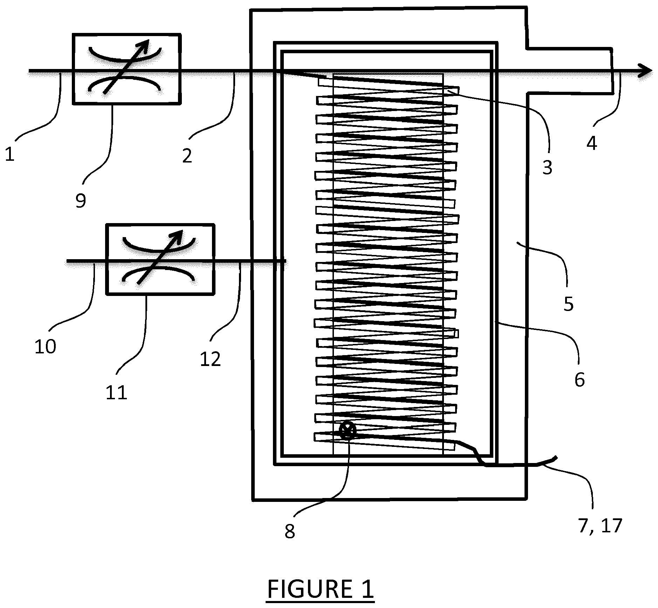

La figure 1 illustre un dispositif de conversion d'un liquide en vapeur comportant une enceinte **6** pourvue d'une sortie de vapeur **4** et d'une entrée de liquide **2** couplée à un premier régulateur de débit classique **9** lui-même alimenté par une entrée liquide **1**. Le premier régulateur de débit **9** peut être un régulateur du commerce, par exemple un régulateur de débit massique thermique ou Coriolis. L'enceinte **6** contient différents éléments assurant la conversion de liquide en vapeur, en particulier une hélice **3** dans laquelle est insérée une résistance électrique chauffante filaire, par exemple de section ronde, faisant office de surface chauffante **7** et de surface d'évaporation **17**. Un capteur de température **8** est installé en partie basse de l'hélice **3** au contact de la résistance électrique. Une enveloppe isolante thermique **5** est disposée sur la paroi du générateur de vapeur pour éviter les points froids. De préférence, l'enveloppe **5** est maintenue à une température largement supérieure à la température d'ébullition du liquide.

Dans l'exemple non limitatif de la figure 1, un régulateur de débit de gaz **11**, alimenté par une ligne de gaz **10**, est raccordé sur le générateur de vapeur par une entrée **12** dans l'objectif de permettre la réalisation d'un mélange gazeux.

Une unité de commande, non représentée, est reliée au premier régulateur **9**, au deuxième régulateur **11**, au capteur de température **8** et à la résistance électrique de sorte à commander un débit $D_L$ dans le premier régulateur **9**, un débit $D_g$ dans le second régulateur et une puissance de chauffage **P** de la résistance électrique. La puissance de chauffage **P** de la résistance électrique est commandée en fonction des débits $D_L$ et $D_g$ et de la température **T** mesurée par le capteur de température **8** selon une loi de commande.

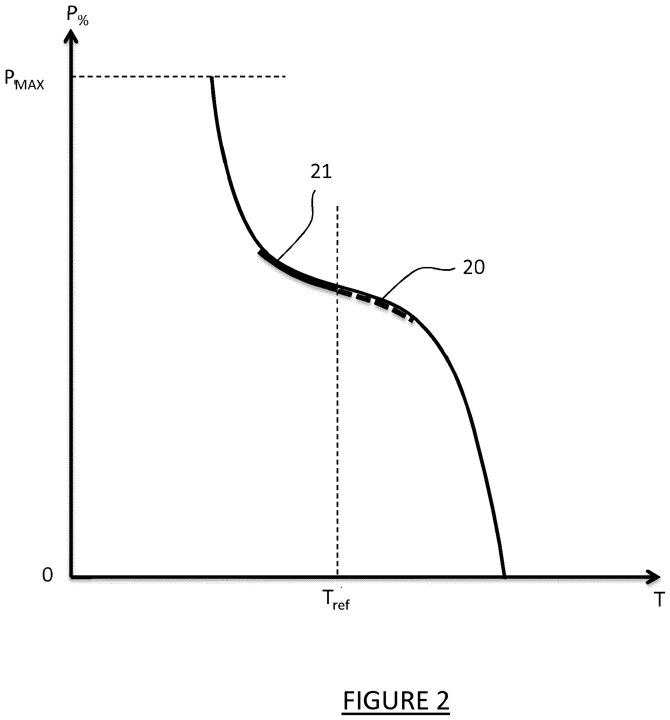

La figure 2 illustre cette loi de commande de la puissance **P** pour deux débits $D_L$ et $D_g$ particuliers en fonction de la température **T**. La loi de commande est centrée sur une température de référence $T_{ref}$, et évolue de façon non linéaire et inversement proportionnelle à l'écart entre la température de référence $T_{ref}$ et la température mesurée **T**. La puissance **P** est représentée entre zéro Watt et la puissance maximale $P_{MAX}$ de la surface chauffante **7**. La puissance théorique $P_T$ est positionnée sur la partie **20** de la loi de commande lorsque les débits $D_L$ et $D_g$ sont faibles, cela permet d'anticiper une augmentation de débit puisque le système fonctionne à une température supérieure à $T_{ref}$. Inversement, la partie **21** représente cette puissance théorique $P_T$ lorsque les débits $D_L$ et $D_g$ sont importants avec anticipation d'une baisse de ces débits puisque le système fonctionne à une température inférieure à $T_{ref}$.

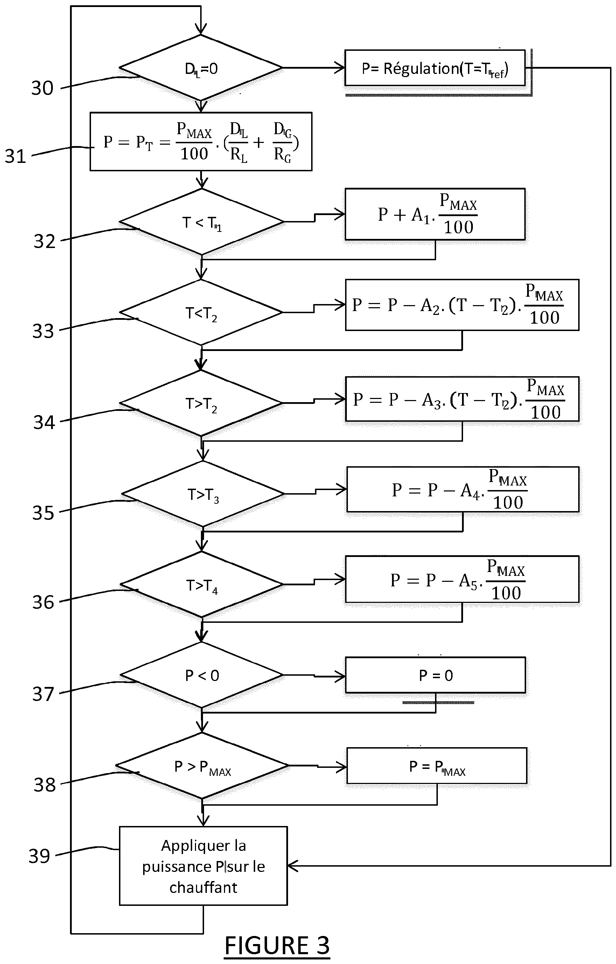

La figure 3 illustre un organigramme du procédé de régulation de la puissance **P** mise en œuvre avec des fonctions très simples, telles que des comparaisons, des additions, des soustractions ou des multiplications. L'organigramme représente une boucle automatisée de tests et de calculs qui aboutit à une valeur de puissance **P** qui est appliquée sur la surface chauffante **7**.

Dans une première étape **30**, lorsque le générateur ne vaporise pas de liquide, c'est-à-dire lorsque le régulateur de débit **9** a une consigne nulle, alors la puissance **P** est adaptée pour maintenir le cordon chauffant à la température de référence $T_{ref}$. Cette régulation peut être réalisée par une régulation classique, type seuil ou PID.

Dans une étape **31**, lorsque le générateur vaporise du liquide, c'est-à-dire lorsque le régulateur de débit **9** de liquide a une consigne supérieure à zéro, alors une puissance théorique $P_T$ est calculée en fonction du débit de liquide à évaporer $D_L$ et d'un coefficient $R_L$ prenant en compte la chaleur latente de vaporisation du liquide considéré et la chaleur massique de la vapeur, et la contribution du débit de gaz à chauffer $D_G$ divisé par un coefficient $R_G$ prenant en compte la chaleur massique du gaz considéré, selon la formule suivante :

$$P_T = \frac{P_{MAX}}{100} \cdot \left( \frac{D_L}{R_L} + \frac{D_G}{R_G} \right)$$

La puissance **P** à appliquer sur le cordon chauffant est donc initialisée avec cette valeur théorique $P_T$ et va être adaptée dans les étapes suivantes en fonction de la température **T**.

$$P = P_T$$

Dans une étape **32**, la température mesurée **T** est comparée avec un premier seuil de température $T_1$ choisi

entre la température de vaporisation du liquide $T_{vap}$ et la température de référence $T_{ref}$. Si la température mesurée $T$ est inférieure au premier seuil de température $T_1$, alors la puissance $P$ est augmentée d'un coefficient $A_1$ positif et supérieur à $1$ selon la formule suivante :

$$T{<}T_1 \rightarrow P = P + A_1 . \frac{P_{MAX}}{100}$$

Dans une étape 33, la température mesurée $T$ est comparée avec un second seuil de température $T_2$ supérieur à la température de référence $T_{ref}$. Si la température mesurée $T$ est inférieure au second seuil de température $T_2$, alors la puissance $P$ est augmentée linéairement d'un coefficient $A_2$ positif et inférieur à $1$ selon la formule suivante :

$$T{<}T_2 \rightarrow P = P - A_2 . (T - T_2) . \frac{P_{MAX}}{100}$$

Dans une étape 34, la température mesurée $T$ est comparée avec le second seuil de température $T_2$. Si la température mesurée $T$ est supérieure au second seuil de température $T_2$, alors la puissance $P$ est diminuée linéairement d'un coefficient $A_3$ positif et inférieur à $1$ selon la formule suivante :

$$T{>}T_2 \rightarrow P = P - A_3 . (T - T_2) . \frac{P_{MAX}}{100}$$

Dans une étape 35, la température mesurée $T$ est comparée avec un troisième seuil de température $T_3$ supérieur au second seuil de température $T_2$. Si la température mesurée $T$ est supérieure au troisième seuil de température $T_3$, alors la puissance $P$ est diminuée d'un coefficient $A_4$ positif et supérieur à $1$ selon la formule suivante :

$$T{>}T_3 \rightarrow P = P - A_4 . \frac{P_{MAX}}{100}$$

Dans une étape 36, la température mesurée $T$ est comparée avec un quatrième seuil de température $T_4$, supérieur au troisième seuil de température $T_3$. Si la température mesurée $T$ est supérieure au quatrième seuil de température $T_4$, alors la puissance $P$ est diminuée d'un coefficient $A_5$ positif et supérieur à $1$ selon la formule suivante :

$$T{>}T_4 \rightarrow P = P - A_5 . \frac{P_{MAX}}{100}$$

Les étapes 37 et 38 permettent de borner les valeurs de la puissance $P$. Si le résultat des calculs ci-dessus donne une valeur $P$ inférieure à zéro, alors $P$ est fixé à zéro. Si le résultat des calculs ci-dessus donne une valeur $P$ supérieure à $P_{MAX}$ alors $P$ est fixé à $P_{MAX}$. Pour finir, dans l'étape 39, la consigne de puissance $P$ est appliquée sur la surface chauffante 7, puis la boucle de tests reprend au début.

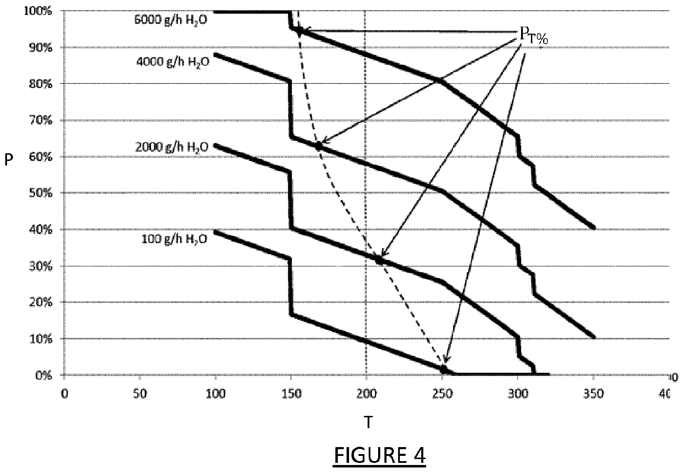

La figure 4 illustre le cas particulier d'un dispositif de conversion d'eau en vapeur, intégrant des alimentations en gaz avec de l'hydrogène et de l'azote. Le débit maximum d'eau est de 6400 g/h, celui d'hydrogène est de 500 1/h et celui d'azote de 1000 1/h. La puissance maximale $P_{Max}$ de la résistance chauffante est de 6000W. De préférence, la température de référence $T_{ref}$ est comprise entre 150°C et 250°C. Dans l'exemple de la figure 4, la température de référence $T_{ref}$ est fixée à 200°C, soit 100°C au-dessus du point d'ébullition de l'eau.

Dans la première étape 30, lorsque le générateur ne vaporise pas de liquide, c'est-à-dire lorsque le régulateur de débit 9 a une consigne nulle, alors la puissance $P$ est adaptée pour maintenir le cordon chauffant à la température de référence $T_{ref}$ soit 200°C.

Dans l'étape 31, lorsque le générateur vaporise du liquide, c'est-à-dire lorsque le régulateur de débit 9 de liquide a une consigne supérieure à zéro, alors une puissance théorique $P_T$ est calculée en fonction du débit d'eau à évaporer ($D_{H2O}$ en g/h), du débit d'hydrogène ($D_{H2}$ en l/h) et du débit d'azote ($D_{N2}$ en l/h) selon la formule suivante :

$$P_T = \frac{P_{MAX}}{100} . \left( \frac{D_{H2O}}{80} + \frac{D_{H2}}{500} + \frac{D_{N2}}{500} \right)$$

Les valeurs numériques 80 et 500 ont été déterminées par calcul puis vérifiées et affinées par des essais expérimentaux :

- Sachant que le débit $D_{H2O}$ est en g/h, le ratio $D_{H2O}$ /80 correspond au pourcentage de la puissance totale $P_{Max}$ nécessaire pour évaporer 1g/h d'eau, c'est-à-dire la puissance électrique $P_1$ nécessaire pour chauffer un débit $D_0$=1g/h=2,78.$10^{-7}$kg/s d'eau de 20 à 100°C (1), $P_2$ pour l'évaporation (2) et $P_3$ pour chauffer la vapeur produite de 100 à 200°C (3).

$$(1) \quad P_1 = D_0.Cp_{eau}. \ (20\text{-}100) = 0,093 \text{ W} \qquad \text{avec } Cp_{eau} = 4195 \text{ J/(kg.K)}$$

$$(2) \quad P_2 = D_0.C_{Lvapeur} = 0,627 \text{ W} \qquad \text{avec } C_{Lvapeur} = 2,26.10^6 \text{ J/kg}$$

$$(3) \quad P_3 = D_0.Cp_{vapeur}. \ (100\text{-}100) = 0,056 \text{ W} \qquad \text{avec } Cp_{vapeur} = 2030 \text{ J/(kg.K)}$$

Le ratio théorique est donc de $P_{Max}/100/(P_1+P_2+P_3)=77,2$

Ce ratio théorique ne tient pas compte des pertes thermiques et doit être vérifié expérimentalement, ce qui a conduit à choisir la valeur 80 dans l'algorithme de régulation.

- Sachant que le débit $D_{H2}$ est en l/h, le ratio $D_{H2}/500$ correspond au pourcentage de la puissance totale $P_{Max}$ nécessaire pour chauffer 1l/h d'hydrogène, c'est-à-dire la puissance électrique $P_{H2}$ nécessaire pour chauffer un débit $D_{H2}$=1l/h=2,78.$10^{-4}$l/S d'hydrogène de 20 à 200°C.

$$P_{H2} = D_{H2}.Cp_{H2}. \ (20\text{-}200) = 0,035 W \qquad \text{avec } Cp_{H2} = 1,27 \text{ J/(l.K)}$$

Le ratio théorique est donc de $P_{Max}/100/P_{H2}=1695$

Ce ratio théorique ne tient pas compte des pertes thermiques et doit être vérifié expérimentalement, ce qui a conduit à choisir la valeur 500 dans l'algorithme de régulation.

- Le même type de calcul est réalisé pour le gaz $N_2$. Sachant que le débit $D_{N2}$ est en l/h, le ratio $D_{N2}/500$ correspond au pourcentage de la puissance totale $P_{Max}$ nécessaire pour chauffer 1l/h d'AZOTE, c'est-à-dire la puissance électrique $P_{N2}$ nécessaire pour chauffer un débit $D_{N2}$=1l/h=2,78.$10^{-4}$l/s d'azote de 20 à 200°C.

$$P_{H2} = D_{N2}.Cp_{N2}. \ (20\text{-}200) = 0,036 W \qquad \text{avec } Cp_{N2} = 1,28 \text{ J/(l.K)}$$

Le ratio théorique est donc de $P_{Max}/100/P_{N2}=1685$

Ce ratio théorique ne tient pas compte des pertes thermiques et doit être vérifié expérimentalement, ce qui a conduit à choisir la valeur 500 dans l'algorithme de régulation.

Dans l'étape **32,** la température mesurée **T** est comparée avec un premier seuil de température $T_1$ choisi à 150°C. Si la température mesurée **T** est inférieure à 150°C, alors la puissance **P** est augmentée d'un coefficient $A_1$ correspondant à la valeur 15 selon la formule suivante :

$$T<150°C \rightarrow P = P + 15.\frac{P_{MAX}}{100}$$

Cette augmentation de 15% a été déterminée expérimentalement lors des essais de qualification du générateur de vapeur. Il en est de même pour les coefficients $A_2$, $A_3$, $A_4$, et $A_5$.

Dans l'étape **33,** la température mesurée **T** est comparée avec un second seuil de température $T_2$ choisi à 250°C. Si la température mesurée **T** est inférieure à 250°C, alors la puissance **P** est augmentée linéairement d'un coefficient $A_2$ correspondant à la valeur 0,15, selon la formule suivante :

$$T<250°C \rightarrow P = P - 0,15.(T - 250).\frac{P_{MAX}}{100}$$

Dans l'étape **34,** la température mesurée **T** est comparée avec le second seuil de température $T_2$. Si la température mesurée **T** est supérieure à 250°C, alors la puissance **P** est diminuée linéairement d'un coefficient $A_3$ correspondant à la valeur 0,3 selon la formule suivante :

$$T>250°C \rightarrow P = P - 0.3.(T - 250).\frac{P_{MAX}}{100}$$

Dans l'étape **35**, la température mesurée **T** est comparée avec un troisième seuil de température $T_3$ choisi à 300°C. Si la température mesurée **T** est supérieure à 300°C, alors la puissance **P** est diminuée d'un coefficient $A_4$ correspondant à la valeur 5, soit une baisse de 5%, selon la formule suivante :

$$T>300°C \rightarrow P = P - 5.\frac{P_{MAX}}{100}$$

Dans l'étape **36,** la température mesurée **T** est comparée avec un quatrième seuil de température $T_4$ choisi à 310°C. Si la température mesurée **T** est supérieure à 310°C, alors la puissance **P** est diminuée d'un coefficient $A_5$ correspondant à la valeur 5, soit une baisse de 5% selon la formule suivante :

$$T>310°C \rightarrow P = P - 5.\frac{P_{MAX}}{100}$$

En variante, la valeur des seuils de température et des coefficients peut varier sans changer l'invention. Par exemple, le premier seuil de température $T_1$ peut être compris entre 140°C et 175°C. Le second seuil de température $T_2$ peut être compris entre 220°C et 280°C. Le troisième seuil de température $T_3$ peut être compris entre 280°C et 350°C. Le quatrième seuil de température $T_4$ peut être compris entre 300°C et 350°C. Les coefficients $A_1$, $A_2$ et $A_3$ peuvent être compris entre 1,05 et 10. Les coefficients $A_4$ et $A_5$ peuvent être compris entre 0,1 et 1.

La figure 4 illustre l'évolution de la puissance **P** en fonction de la température mesurée **T** correspondant à des valeurs de production types couvrant toute la plage de production avec 100g/h, 2000g/h, 4000g/h et 6000g/h. La puissance théorique $P_T$ est localisée au-dessus de la température de référence (200°C) à faible débit (100g/h, 2000g/h) et en dessous de cette température à fort débit (4000g/h et 6000g/h).

Les tests réalisés avec l'invention, tels qu'illustrés sur la figure 4 ont donné entière satisfaction en permettant une régulation stable sur de longues durées de fonctionnement à débit constant et autorisant des changements de débit importants sans créer de surpression néfaste aux équipements utilisant la vapeur en aval.

## Revendications

**1.** Dispositif de conversion d'un liquide en vapeur pour électrolyseur de vapeur d'eau à haute température, le dispositif comportant :

- une surface d'évaporation (17),
- une entrée de liquide (2) connectée à la surface d'évaporation (17),
- des moyens de chauffage (7) de la surface d'évaporation (17),
- un régulateur de débit (9) disposé au niveau de l'entrée de liquide (2), et
- une unité de commande configurée pour commander un débit de liquide ($D_L$) injecté dans l'entrée de liquide (2) par le régulateur de débit (9),

*caractérisé* :

- **en ce que** le dispositif comporte également :

■ une enceinte (6) contenant la surface d'évaporation (17) présentant une forme hélicoïdale, ladite enceinte (6) présentant une ouverture connectée à l'entrée de liquide (2) et une sortie de vapeur (4), et
■ un capteur de température (8) disposé sur la surface d'évaporation (17),

- et **en ce que** l'unité de commande est configurée pour commander une puissance de chauffage (P) des moyens de chauffage (7) en fonction d'un débit ($D_L$) et d'une température (T) mesurée par le capteur de température (8) selon une loi de commande prédéterminée, ladite loi de commande prédéterminée évoluant, pour chaque débit ($D_L$), de façon non-linéaire et inversement proportionnelle à l'écart entre une température de référence ($T_{ref}$) de l'enceinte (6) et la température (T) mesurée par le capteur de température (8).

**2.** Dispositif de conversion d'un liquide en vapeur selon la revendication 1, *caractérisé* **en ce que** le capteur de température (8) est positionné au niveau d'une extrémité de la surface d'évaporation (17) opposée à l'extrémité connectée à l'entrée de liquide (2).

3. Dispositif de conversion d'un liquide en vapeur selon l'une des revendications 1 à 2, *caractérisé* **en ce qu'**il comporte également une entrée de gaz (12) débouchant dans l'enceinte (6) et un second régulateur de débit (11), disposé au niveau de l'entrée de gaz (12), l'unité de commande étant configurée pour commander une puissance de chauffage (P) des moyens de chauffage (7) en fonction d'un débit ($D_L$) du premier régulateur de débit (9), d'un débit ($D_g$) du second régulateur de débit (11) et d'une température (T) mesurée par le capteur de température (8) selon une loi de commande prédéterminée.

4. Procédé de régulation d'une puissance de chauffage (P) d'un dispositif de conversion d'un liquide en vapeur selon l'une des revendications 1 à 3, *caractérisé* **en ce qu'**il comporte les étapes suivantes :

    - si la consigne de débit ($D_L$) est nulle, régulation de la puissance de chauffage (P) des moyens de chauffage (7) pour obtenir une température (T) de l'enceinte (6) sensiblement égale à la température de référence ($T_{ref}$),
    - si la consigne de débit ($D_L$) est non nulle, calcul d'une puissance de chauffage théorique ($P_T$) correspondant au débit ($D_L$) divisé par un coefficient ($R_L$),
    - correction de la puissance de chauffage théorique ($P_T$) en fonction de la température (T) mesurée par le capteur de température (8), et
    - application de la puissance de chauffage théorique corrigée aux moyens de chauffage (7).

5. Procédé de régulation d'une puissance de chauffage selon la revendication 4, *caractérisé* **en ce que**, lorsque le dispositif comporte une entrée de gaz (12) débouchant dans l'enceinte (6) et un second régulateur de débit (11) disposé au niveau de l'entrée de gaz (12), le calcul de la puissance de chauffage théorique ($P_T$) correspond à la puissance maximale ($P_{MAX}$) des moyens de chauffage (7) en pourcentage multiplié par le débit ($D_L$) divisé par un coefficient ($R_L$) ajouté avec le débit ($D_G$) du second régulateur de débit (11) divisé par un second coefficient ($R_G$).

6. Procédé de régulation d'une puissance de chauffage selon la revendication 4 ou 5, *caractérisé* **en ce que** le coefficient ($R_L$) est déterminé en fonction de la chaleur latente de vaporisation du liquide considéré et la chaleur massique de la vapeur.

7. Procédé de régulation d'une puissance de chauffage selon l'une des revendications 4 à 6, *caractérisé* **en ce que** la température de référence ($T_{ref}$) correspond à une température moyenne choisie pour le fonctionnement du dispositif de conversion d'un liquide en vapeur, la température de référence ($T_{ref}$) étant supérieure à la température de vaporisation ($T_{vap}$) du liquide.

8. Procédé de régulation d'une puissance de chauffage selon l'une des revendications 4 à 7, *caractérisé* **en ce que** l'étape de correction de la puissance de chauffage théorique ($P_T$) comporte les étapes suivantes :

    - si la température (T) mesurée est inférieure à un premier seuil de température ($T_1$), la puissance (P) est corrigée par une addition de la puissance maximale ($P_{MAX}$) des moyens de chauffage (7) en pourcentage multipliée avec un premier coefficient ($A_1$), le premier seuil de température ($T_1$) étant choisi entre la température de vaporisation ($T_{vap}$) du liquide et la température de référence ($T_{ref}$),
    - si la température (T) mesurée est inférieure à un second seuil de température ($T_2$), la puissance (P) est corrigée par une soustraction de la puissance maximale ($P_{MAX}$) des moyens de chauffage (7) en pourcentage multipliée avec la différence de température entre la température (T) mesurée et le second seuil de température ($T_2$) et avec un second coefficient ($A_2$), le second seuil de température ($T_2$) étant choisi supérieur à la température de référence ($T_{ref}$),
    - si la température (T) mesurée est supérieure au second seuil de température ($T_2$), la puissance (P) est corrigée par une soustraction de la puissance maximale ($P_{MAX}$) des moyens de chauffage (7) en pourcentage multipliée avec la différence de température entre la température (T) mesurée le second seuil de température ($T_2$) et avec un troisième coefficient ($A_3$), et
    - si la température (T) mesurée est supérieure à un troisième seuil de température ($T_3$), la puissance (P) est corrigée par une soustraction de la puissance maximale ($P_{MAX}$) des moyens de chauffage (7) en pourcentage multipliée avec un quatrième coefficient ($A_4$), le troisième seuil de température ($T_3$) étant choisi supérieur au second seuil de température ($T_2$).

9. Procédé de régulation d'une puissance de chauffage selon la revendication 8, *caractérisé* **en ce que** l'étape de correction de la puissance de chauffage théorique ($P_T$) comporte l'étape suivante : si la température (T) mesurée est supérieure à un quatrième seuil de température ($T_4$), la puissance (P) est corrigée par une soustraction de la puissance maximale ($P_{MAX}$) des moyens de chauffage (7) en pourcentage multipliée avec un cinquième coefficient ($A_5$), le quatrième seuil de température ($T_4$) étant choisi supérieur au troisième seuil de température ($T_3$).

10. Procédé de régulation d'une puissance de chauffage selon la revendication 8 ou 9, *caractérisé* **en ce que** l'étape de correction de la puissance de chauffage théorique ($P_T$) comporte les étapes suivantes :

- si la valeur de la puissance (P) corrigée est inférieure à zéro, la puissance (P) est fixée à zéro, et
- si la valeur de la puissance (P) corrigée est supérieure à une puissance maximale de chauffage, la puissance (P) est fixée à la puissance maximale de chauffage.

**Patentansprüche**

1. Vorrichtung zum Umwandeln einer Flüssigkeit in Dampf für Hochtemperatur-Wasserdampf-Elektrolyseur, wobei die Vorrichtung enthält

- eine Verdampfungsfläche (17),
- einen Flüssigkeitseinlass (2), verbunden mit der Verdampfungsfläche (17),
- eine Heizung zum Erwärmen (7) der Verdampfungsfläche (17),
- einen Durchflussregler (9), angeordnet in Höhe des Flüssigkeitseinlasses (2),
- und eine Steuereinheit, konfiguriert zur Steuerung einer Durchflussmenge ($D_L$), die vom Durchflussregler (9) in den Flüssigkeitseinlass (2) eingespritzt wird,

*dadurch gekennzeichnet, dass*:

- die Vorrichtung auch beinhaltet:

  • eine Kammer (6), die die Verdampfungsfläche (17) enthält, und eine Spiralform hat, diese Kammer (6) weist eine Öffnung auf, die mit dem Flüssigkeitseinlass (2) und einem Dampfauslass (4) verbunden ist, und
  • einen Temperatursensor (8), angeordnet auf der Verdampfungsfläche (17),

- und dadurch, dass die Steuereinheit konfiguriert ist, um eine Heizleistung (P) der Heizung (7) in Abhängigkeit von der Durchflussmenge ($D_L$) und einer Temperatur (T) zu steuern, gemessen vom Temperatursensor (8) nach einem vorher festgelegten Regelgesetz, dieses vorher festgelegte Regelgesetz entwickelt sich, für jede Durchflussmenge ($D_L$), in nicht-linearer Art und Weise, umgekehrt proportional zum Abstand zwischen einer Referenztemperatur ($T_{ref}$) der Kammer (6) und der vom Temperatursensor (8) gemessenen Temperatur (T).

2. Vorrichtung zum Umwandeln einer Flüssigkeit in Dampf nach Anspruch 1, *dadurch gekennzeichnet, dass* der Temperatursensor (8) in Höhe eines Endstücks der Verdampfungsfläche (17) angeordnet ist, das dem mit dem Flüssigkeitseinlass (2) verbundenen Endstück gegenüberliegt.

3. Vorrichtung zum Umwandeln einer Flüssigkeit in Dampf nach einem der Ansprüche 1 bis 2, *dadurch gekennzeichnet, dass* sie auch einen Gaseinlass (12) enthält, der in der Kammer (6) mündet und einen zweiten Durchflussregler (11), angeordnet in Höhe des Gaseinlasses (12), die Steuereinheit ist dabei dazu konfiguriert, eine Heizleistung (P) der Heizung (7) in Abhängigkeit von einer Durchflussmenge ($D_L$) des ersten Durchflussreglers (9), einer Durchflussmenge ($D_g$) des zweiten Durchflussreglers (11) und einer Temperatur (T), gemessen vom Temperatursensor (8) nach einem vorher festgelegten Regelgesetz, zu steuern.

4. Verfahren zur Steuerung der Heizleistung (P) einer Vorrichtung zum Umwandeln einer Flüssigkeit in Dampf nach einem der Ansprüche 1 bis 3, **dadurch gekennzeichnet, dass** es die folgenden Schritte umfasst:

- wenn der Durchflusssollwert ($D_L$) null ist, Regelung der Heizleistung (P) der Heizung (7) um eine Temperatur (T) der Kammer (6) zu erreichen, die im Wesentlichen gleich der Referenz- Temperatur ($T_{ref}$) ist;
- wenn der Durchflusssollwert ($D_L$) nicht null ist, Berechnung einer theoretischen Heizleistung ($P_T$), entsprechend der Durchflussmenge ($D_L$) geteilt durch einen Koeffizienten ($R_L$),
- Korrektur der theoretischen Heizleistung ($P_T$) in Abhängigkeit von der Temperatur (T), die vom Temperatursensor (8) gemessen wird, und
- Anwendung der korrigierten theoretischen Heizleistung auf die Heizung (7).

5. Verfahren zur Steuerung der Heizleistung nach Anspruch 4, *dadurch gekennzeichnet, dass* wenn die Vorrichtung einen Gaseinlass (12) hat, der in der Kammer (6) mündet, sowie einen zweiten Durchflussregler (11), angeordnet in Höhe des Gaseinlasses (12), die Berechnung der theoretischen Heizleistung ($P_T$) der maximalen Leistung ($P_{MAX}$) der Heizung (7) in Prozent, multipliziert mit der Durchflussmenge ($D_L$), geteilt durch einen Koeffizienten ($R_L$), hinzugefügt mit der Durchflussmenge ($D_G$) des zweiten Durchflussreglers (11), geteilt durch einen zweiten Koeffizienten ($R_G$), entspricht.

6. Verfahren zur Steuerung der Heizleistung nach Anspruch 4 oder 5, *dadurch gekennzeichnet, dass* der Koeffizient ($R_L$) bestimmt wird in Abhängigkeit von der latenten Verdampfungswärme der betrachteten Flüssigkeit und der spezifischen Wärme des Dampfes.

7. Vorrichtung zum Umwandeln einer Flüssigkeit in Dampf nach einem der Ansprüche 4 bis 6, *dadurch gekennzeichnet, dass* die Referenztemperatur ($T_{ref}$) einer durchschnittlichen Temperatur entspricht, die zum Betrieb der Vorrichtung zum Umwandeln einer Flüssigkeit in Dampf gewählt wurde, die Referenztemperatur ($T_{ref}$) ist dabei höher als die Verdampfungstemperatur ($T_{vap}$) der Flüssigkeit.

8. Vorrichtung zum Umwandeln einer Flüssigkeit in Dampf nach einem der Ansprüche 4 bis 7, *dadurch gekennzeichnet, dass* der Schritt zur Korrektur der theoretischen Heizleistung ($P_T$) die folgenden Schritte enthält

- wenn die gemessene Temperatur (T) unter einem ersten Temperaturschwellenwert ($T_1$) liegt, wird die Leistung (P) korrigiert durch eine Addition der maximalen Leistung ($P_{MAX}$) der Heizung (7) in Prozent, multipliziert mit einem ersten Koeffizienten ($A_1$), der erste Temperaturschwellenwert ($T_1$) wird dabei ausgewählt aus der Verdampfungstemperatur ($T_{vap}$) der Flüssigkeit und der Referenztemperatur ($T_{ref}$),
- wenn die gemessene Temperatur (T) unter einem zweiten Temperaturschwellenwert ($T_2$) liegt, wird die Leistung (P) korrigiert durch eine Substraktion der maximalen Leistung ($P_{MAX}$) der Heizung (7) in Prozent, multipliziert mit der Temperaturdifferenz zwischen der gemessenen Temperatur (T) und dem zweiten Temperaturschwellenwert ($T_2$) und mit einem zweiten Koeflizienten($A_2$), der zweite Temperaturschwellenwert ($T_2$) wird dabei höher als die Referenztemperatur ($T_{ref}$) gewählt,
- wenn die gemessene Temperatur (T) über einem zweiten Temperaturschwellenwert ($T_2$) liegt, wird die Leistung (P) korrigiert durch eine Substraktion der maximalen Leistung ($P_{MAX}$) der Heizung (7) in Prozent, multipliziert mit der Temperaturdifferenz zwischen der gemessenen Temperatur (T), dem zweiten Temperaturschwellenwert ($T_2$) und einem dritten Koeffizienten ($A_3$)
- wenn die gemessene Temperatur (T) über einem dritten Temperaturschwellenwert ($T_3$) liegt, wird die Leistung (P) korrigiert durch eine Substraktion der maximalen Leistung ($P_{MAX}$) der Heizung (7) in Prozent, multipliziert mit einem vierten Koeffizienten ($A_4$), der dritte Temperaturschwellenwert ($T_3$) wird höher als der zweite Temperaturschwellenwert ($T_2$) gewählt.

9. Verfahren zur Regelung einer Heizleistung nach Anspruch 8, *dadurch gekennzeichnet, dass* der Schritt der Korrektur der theoretischen Heizleistung ($P_T$) den folgenden Schritt umfasst: wenn die gemessene Temperatur (T) über einem vierten Temperaturschwellenwert ($T_4$) liegt, wird die Leistung (P) korrigiert durch eine Substraktion der maximalen Leistung ($P_{MAX}$) der Heizung (7) in Prozent, multipliziert mit einem fünften Koeffizienten ($A_5$), der vierte Temperaturschwellenwert ($T_4$) wird dabei höher als der dritte Temperaturschwellenwert ($T_3$) gewählt.

10. Verfahren zur Regelung einer Heizleistung nach Anspruch 8 oder 9, *dadurch gekennzeichnet, dass* der Schritt der Korrektur der theoretischen Heizleistung ($P_T$) die folgenden Schritte umfasst: :

- wenn der Wert der korrigierten Leistung (P) kleiner null ist, wird die Leistung (P) auf null festgelegt und
- wenn der Wert der korrigierten Leistung (P) über einer maximalen Heizleistung (P) liegt, wird die Leistung (P) auf die maximale Heizleistung festgelegt.

**Claims**

1. A device for converting a liquid into vapor for a high-temperature vapor electrolyzer, this device comprising:

- an evaporation surface (17),
- a liquid inlet (2) connected to the evaporation surface (17),
- means (7) for heating the evaporation surface (17),
- a flow controller (9) arranged at the level of the liquid inlet (2), and
- a control unit configured to control a liquid flow rate ($D_L$) injected into the liquid inlet (2) by the flow regulator (9),

**characterized**:

- **in that** the device also comprises:

  ■ a chamber (6) containing the evaporation surface (17), having a helical shape, said chamber (6) having an opening connected to the liquid inlet (2) and a vapor outlet (4), and
  ■ a temperature sensor (8) arranged on the evaporation surface (17),

- and **in that** the control unit is configured to control a heating power (P) of the heating means (7) according to a flow rate ($D_L$) and to a temperature (T) measured by the temperature sensor (8) according to a predetermined control law, said predetermined control law varying, for each flow rate ($D_L$), nonlinearly and inversely proportionally to the difference between a reference temperature ($T_{ref}$) of the chamber (6) and the temperature (T) measured by the temperature sensor (8).

2. The device for converting a liquid into vapor of claim 1, **characterized in that** the temperature sensor (8) is positioned at the level of an end of the evaporation surface (17) opposite to the end connected to the liquid inlet (2).

3. The device for converting a liquid into vapor of any of claims 1 and 2, **characterized in that** it also comprises a gas inlet (12) emerging into the enclosure (6) and a second flow controller (11), arranged at the level of the gas inlet (12), the control unit being configured to control a heating power (P) of the heating means (7) according to a flow rate ($D_L$) of the first flow controller (9), to a flow rate ($D_g$) of the second flow controller (11), and to a temperature (T) measured by the temperature sensor (8) according to a predetermined control law.

4. A method of regulating a heating power (P) of the device for converting a liquid into vapor of any of claims 1 to 3, **characterized in that** it comprises the steps of:

   - if the flow rate set point ($D_L$) is zero, regulating the heating power (P) of the heating means (7) to obtain a temperature (T) of the chamber (6) substantially equal to the reference temperature ($T_{ref}$),
   - if the flow rate set point ($D_L$) is non-zero, calculating a theoretical heating power ($P_T$) corresponding to the flow rate ($D_L$) divided by a coefficient ($R_L$),
   - correcting the theoretical heating power ($P_T$) according to the temperature (T) measured by the temperature sensor (8), and
   - applying the corrected theoretical heating power to the heating means (7).

5. The heating power regulation method of claim 4, **characterized in that** when the device comprises a gas inlet (12) emerging into the chamber (6) and a second flow controller (11) arranged at the level of the gas inlet (12), the calculation of the theoretical heating power ($P_T$) corresponds to the maximum power ($P_{MAX}$) of the heating means (7) as a percentage multiplied by the flow rate ($D_L$) divided by a coefficient ($R_L$) added to the flow rate ($D_G$) of the second flow controller (11) divided by a second coefficient ($R_G$).

6. The heating power regulation method of claim 4 or 5, **characterized in that** the coefficient ($R_L$) is determined according to the latent heat of vaporization of the considered liquid and to the specific heat capacity of the vapor.

7. The heating power regulation method of any of claims 4 to 6, **characterized in that** the reference temperature ($T_{ref}$) corresponds to an average temperature selected for the operation of the device for converting a liquid into vapor, the reference temperature ($T_{ref}$) being higher than the vaporization temperature ($T_{vap}$) of the liquid.

8. The heating power regulation method of any of claims 4 to 7, **characterized in that** the step of correcting the theoretical heating power ($P_T$) comprises the steps of:

   - if the measured temperature (T) is lower than a first temperature threshold ($T_1$), correcting the power (P) by an addition of the maximum power ($P_{MAX}$) of the heating means (7) as a percentage multiplied by a first coefficient

($A_1$), the first temperature threshold ($T_1$) being selected between the vaporization temperature ($T_{vap}$) of the liquid and the reference temperature ($T_{ref}$),

- if the measured temperature (T) is lower than a second temperature threshold ($T_2$), correcting the power (P) by a subtraction of the maximum power ($P_{MAX}$) of the heating means (7) as a percentage multiplied by the temperature difference between the measured temperature (T) and the second temperature threshold ($T_2$) and by a second coefficient ($A_2$), the second temperature threshold ($T_2$) being selected to be higher than the reference temperature ($T_{ref}$),

- if the measured temperature (T) is higher than the second temperature threshold ($T_2$), correcting the power (P) by a subtraction of the maximum power ($P_{MAX}$) of the heating means (7) as a percentage multiplied by the temperature difference between the measured temperature (T) and the second temperature threshold ($T_2$) and by a third coefficient ($A_3$), and

- if the measured temperature (T) is higher than a third temperature threshold ($T_3$), correcting the power (P) by a subtraction of the maximum power ($P_{MAX}$) of the heating means (7) as a percentage multiplied by a fourth coefficient ($A_4$), the third temperature threshold ($T_3$) being selected to be higher than the second temperature threshold ($T_2$).

9. The heating power regulation method of claim 8, ***characterized* in that** the step of correcting the theoretical heating power ($P_T$) comprises the step of: if the measured temperature (T) is higher than a fourth temperature threshold ($T_4$), correcting the power (P) by a subtraction of the maximum power ($P_{MAX}$) of the heating means (7) as a percentage multiplied by a fifth coefficient ($A_5$), the fourth temperature threshold ($T_4$) being selected to be higher than the third temperature threshold ($T_3$).

10. The heating power regulation method of claim 8 or 9, ***characterized* in that** the step of correcting the theoretical heating power ($P_T$) comprises the steps of:

- if the value of the corrected power (P) is smaller than zero, setting the power (P) to zero, and
- if the value of the corrected power (P) is greater than a maximum heating power, setting the power (P) to the maximum heating power.

FIGURE 1

FIGURE 2

$$D_L = 0 \quad \rightarrow \quad P = \text{Régulation}(T=T_{ref})$$

$$P = P_T = \frac{P_{MAX}}{100} \cdot \left( \frac{D_L}{R_L} + \frac{D_G}{R_G} \right)$$

$$T < T_1 \quad \rightarrow \quad P + A_1 \cdot \frac{P_{MAX}}{100}$$

$$T < T_2 \quad \rightarrow \quad P = P - A_2 \cdot (T - T_2) \cdot \frac{P_{MAX}}{100}$$

$$T > T_2 \quad \rightarrow \quad P = P - A_3 \cdot (T - T_2) \cdot \frac{P_{MAX}}{100}$$

$$T > T_3 \quad \rightarrow \quad P = P - A_4 \cdot \frac{P_{MAX}}{100}$$

$$T > T_4 \quad \rightarrow \quad P = P - A_5 \cdot \frac{P_{MAX}}{100}$$

$$P < 0 \quad \rightarrow \quad P = 0$$

$$P > P_{MAX} \quad \rightarrow \quad P = P_{MAX}$$

Appliquer la puissance P sur le chauffant

## FIGURE 3

FIGURE 4

## RÉFÉRENCES CITÉES DANS LA DESCRIPTION

**Documents brevets cités dans la description**

- WO 200029787 A
- US 20100025341 A1
- FR 1060544